# EUROPEAN PATENT SPECIFICATION

(11) **EP 4 219 069 B1**
(45) Date of publication and mention of the grant of the patent: **21.10.2026**
(21) Application number: 23152601.3
(22) Date of filing: 20.01.2023
(51) Int. Cl.: B23Q 3/155

(54) **MACHINE TOOL**
WERKZEUGMASCHINE
MACHINE-OUTIL

(30) Priority: 01.02.2022 JP 2022013924
(43) Date of publication of application: 02.08.2023
(73) Proprietor: DMG Mori Co., Ltd., Yamatokoriyama-shi, Nara 639-1160 (JP)
(72) Inventor: AOYAMA, Akihisa, Yamatokoriyama-shi, 639-1160 (JP); ASADA, Tetsushi, Yamatokoriyama-shi, 639-1160 (JP)
(74) Representative: Isarpatent

(56) References cited:
- EP-A1- 3 454 147
- WO-A1-2022/018923

## Description

The present invention relates to a technology for tool change in machine tools.

Machine tools include devices for cutting a workpiece into a desired shape, and devices for depositing metal powder or the like to make a workpiece. Examples of machine tools for cutting include a turning center that machines a workpiece by applying a cutting tool to the workpiece that is being turned, a machining center that machines a workpiece by applying a turning tool to the workpiece, and a combined machine including these functions in combination.

In a machine tool including a tool rest, a plurality of tools may be attached to the tool rest. The machine tool machines a workpiece while moving the tool rest (turret base) three-dimensionally and selecting a tool to be applied to the workpiece from the tools attached to the tool rest in accordance with a machining program prepared in advance.

Some machine tools include an external tool storage unit that has a number of tools stored therein. When a necessary tool is not attached to the tool rest, the machine tool attaches a specified tool to the tool rest from the tool storage unit and continues machining of the workpiece. Hereinafter, a tool attached to the tool rest is referred to as a "work tool", and a tool stored in the tool storage unit is referred to as a "spare tool". Unless otherwise specified, they are simply referred to as a "tool" (refer to JP 2008-225738 A, JP 2000-218459 A, and JP S62-236642 A).

WO 2022/018923 A1 discloses a machine tool comprising: a tool rest including a first holder configured to hold a tool for cutting an inner-diameter side portion of a workpiece and a second holder configured to hold a tool for cutting an outer-diameter side portion of a workpiece; a machining control unit configured to control a tool attached to the tool rest to machine a workpiece in accordance with a machining program; a tool changing unit configured to change holding positions of a plurality of tools between holders of the tool rest; and a tool management unit.

### Related Art List

(1) JP 2008-225738 A
(2) JP 2000-218459 A
(3) JP S62-236642 A

A plurality of tools may be joined to a tool rest in a plurality of methods. For example, two types of holders including a holder for cutting an inner-diameter side portion of a workpiece and a holder for cutting an outer-diameter side portion of a workpiece may be set in the tool rest, or a holder for turning and a holder for rotary machining may be set. Tools are fixed to these holders.

Further, a plurality of tools of the same type may be joined to a tool rest. For example, when three or more tools T are attached to a tool rest including both a holder HI for inner diameter machining and a holder HO for outer diameter machining, the following situation may occur.

First, it is assumed that three tools T of the same type are attached to two holders HI (for inner diameter machining) and one holder HO (for outer diameter machining). It is further assumed that the tool T held by the "minority-side" holder HO has become unusable during machining. A tool that has become a state where it is not to be used is referred to as an "unused tool" in the following descriptions. For example, when the only one tool T in the holder HO (for outer diameter machining) becomes unusable, the tool rest can no longer continue outer diameter machining although it can continue inner diameter machining.

In this case, it suffices to change the unused tool T attached to the holder HO (for outer diameter machining) with the tool T of the same type stored in a tool storage unit. However, no tool T may be left in the tool storage unit.

A machine tool according to an aspect of the present invention includes: a tool rest including a first holder configured to hold a tool for cutting an inner-diameter side portion of a workpiece and a second holder configured to hold a tool for cutting an outer-diameter side portion of a workpiece; a machining control unit configured to control a tool attached to the tool rest to machine a workpiece in accordance with a machining program; a tool changing unit configured to change holding positions of a plurality of tools between holders of the tool rest; and a tool management unit configured to identify an unused tool in the tools held by the tool rest, the unused tool being a tool not to be used.

In a case where a plurality of tools of a same type are held by both the first and second holders, when number of the first holders in holders as holding targets is larger than number of the second holders in the holders as the holding targets, and one of the tools held by the second holders is identified as the unused tool, the tool changing unit changes the unused tool in the second holder with the tool in the first holder.

A machine tool according to another aspect of the present invention includes: a tool rest including a first holder configured to hold a tool for cutting an inner-diameter side portion of a workpiece and a second holder configured to hold a tool for cutting an outer-diameter side portion of a workpiece; a machining control unit configured to control a tool held by the tool rest to machine a workpiece in accordance with a machining program; a tool changing unit configured to change holding positions of a plurality of tools between holders of the tool rest; and a tool management unit configured to identify an unused tool in the tools held by the tool rest, the unused tool being a tool not to be used.

In a case where a plurality of tools of a same type are held by both the first and second holders, when number of the second holders in holders as holding targets is larger than number of the first holders in the holders as the holding targets, and one of the tools held by the first holders is identified as the unused tool, the tool changing unit changes the unused tool in the first holder with the tool held by the second holder.

A machine tool according to still another aspect of the present invention includes: a tool rest including a first holder configured to allow a shank portion of a tool to be inserted thereinto in a first direction to hold the tool and a second holder configured to allow a shank portion of a tool to be inserted thereinto in a second direction different from the first direction to hold the tool; a machining control unit configured to control a tool held by the tool rest to machine a workpiece in accordance with a machining program; a tool changing unit configured to change holding positions of a plurality of tools between holders of the tool rest; and a tool management unit configured to identify an unused tool in the tools held by the tool rest, the unused tool being a tool not to be used.

In a case where a plurality of tools of a same type are held by both the first and second holders, when number of the first holders in holders as holding targets is larger than number of the second holders in the holders as the holding targets, and one of the tools attached to the second holders is identified as the unused tool, the tool changing unit changes the unused tool in the second holder with the tool in the first holder.

A machine tool according to still another aspect of the present invention includes: a tool rest including a turning holder configured to fix a tool to allow the tool to perform turning and a rotary holder configured to fix a tool to allow the tool to perform rotary machining; a machining control unit configured to control a tool held by the tool rest to machine a workpiece in accordance with a machining program; a tool changing unit configured to change holding positions of a plurality of tools between holders of the tool rest; and a tool management unit configured to identify an unused tool in the tools held by the tool rest, the unused tool being a tool prohibited from use.

In a case where a plurality of tools of a same type are held by both the turning holder and the rotary holder, when number of one of the turning holders and the rotary holders as holding targets is larger than number of the other, and one of the tools attached to holders on a minority side is identified as the unused tool, the tool changing unit changes the unused tool in the holder on the minority side with the tool in the holder on a majority side.

According to the present invention, in a case of attaching a plurality of tools of the same type to a tool rest in a plurality of methods, machining work can be easily continued even when any of the tools becomes unusable.
FIG. 1 is a plan view illustrating a schematic configuration of a machine tool in an embodiment of the present invention;
FIG. 2 is a perspective view of the machine tool;
FIG. 3 is a perspective view of a tool storage unit and a tool changing unit;
FIG. 4 is an enlarged perspective view of a portion A illustrated in FIG. 3;
FIG. 5 is an external perspective view of a turret;
FIG. 6 is a hardware configuration diagram of the machine tool;
FIG. 7 is a functional block diagram of an information processing device;
FIG. 8 is a schematic diagram for explaining external tool change in an unevenly distributed state;
FIG. 9 is a schematic diagram for explaining internal tool change in an unevenly distributed state; and
FIG. 10 is a flowchart illustrating processes when an unused tool is detected.

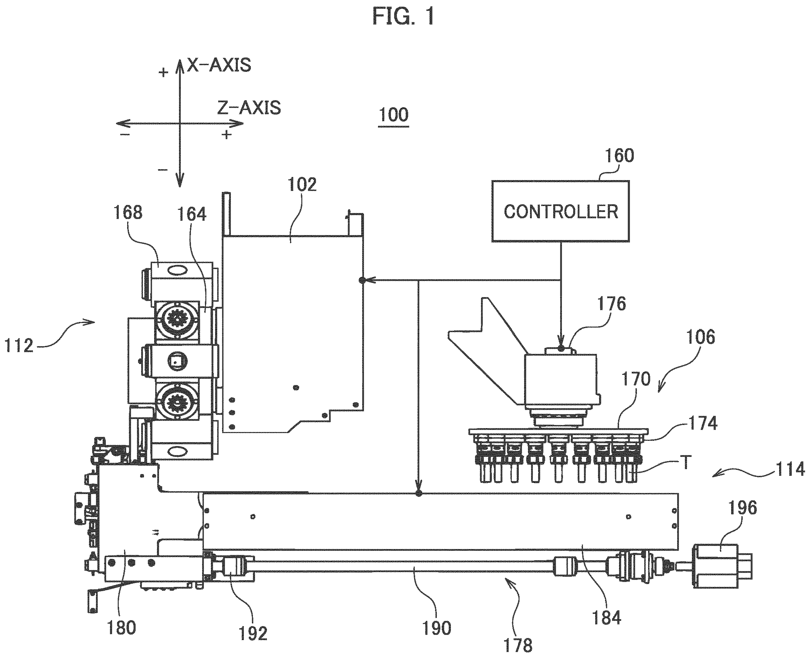

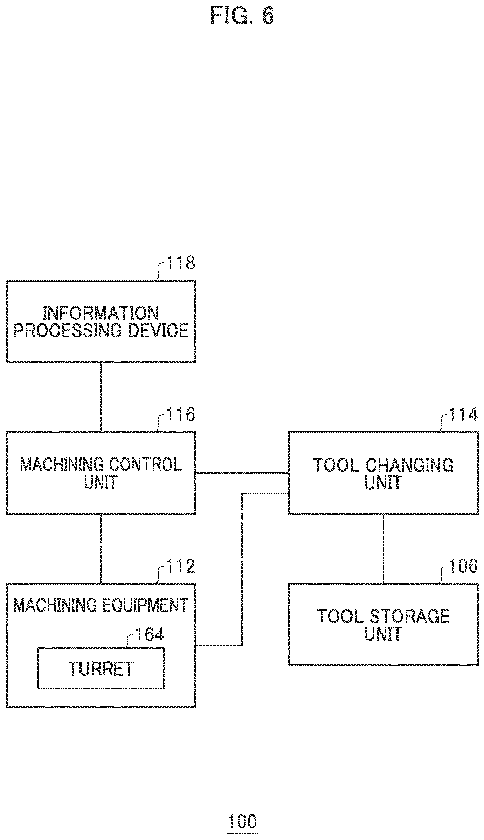

A machine tool in the present embodiment is a turning center or a combined machine. First, the structure of a machine tool is mainly described with reference to FIGS. 1 to 5. Details of control of tool change in the present embodiment are described with reference to FIG. 6 and subsequent drawings.

FIG. 1 is a plan view illustrating a schematic configuration of a machine tool 100 in the present embodiment.

The machine tool 100 includes a controller 160, machining equipment 112, a tool changing unit 114, and a tool storage unit 106. The controller 160 corresponds to an information processing device 118 and a machining control unit 116 described later with reference to FIG. 6. A turret base 102 and a turret 164 are movable in the X, Y, and Z-axis directions. The turret base 102 and the turret 164 may be collectively referred to as a tool rest, and only the turret 164 may be referred to as a tool rest. FIG. 1 is a plan view in an X-Z plane. The turret 164 is disposed on the turret base 102 to be rotatable about the Z-axis. The tool storage unit 106 (a tool magazine) is provided on the positive side in the Z-axis direction of the turret base 102. The tool changing unit 114 transfers a tool T.

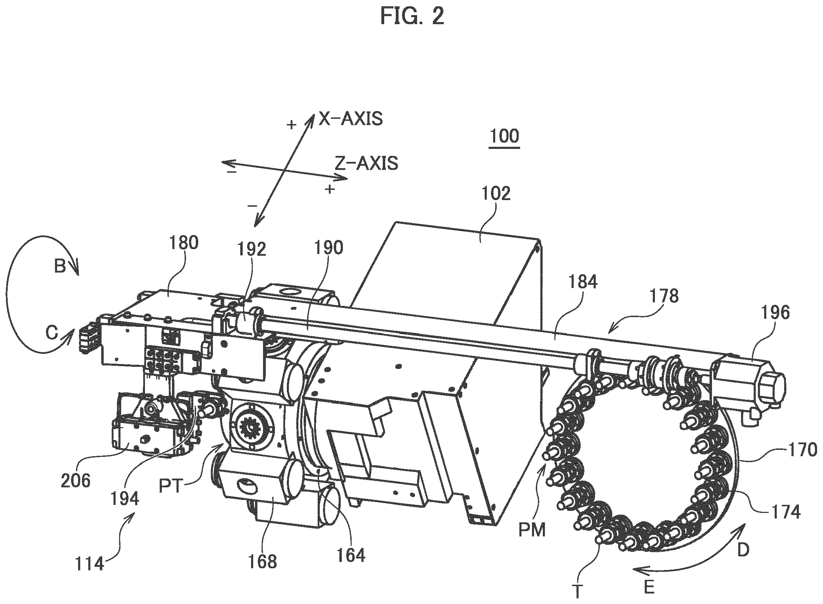

FIG. 2 is a perspective view of the machine tool 100.

The turret 164 in the shape of a prism has a plurality of holders 168 for holding tools T on its outer peripheral plane. The holders 168 are attached to a turret body to be detachable. The tool T attached to the holder 168 at a position PT is the target of attachment and detachment. By rotating the turret 164 in a direction of an arrow B-C (a direction of rotation about the Z-axis), each holder 168 can be indexed to the attachment/detachment position PT.

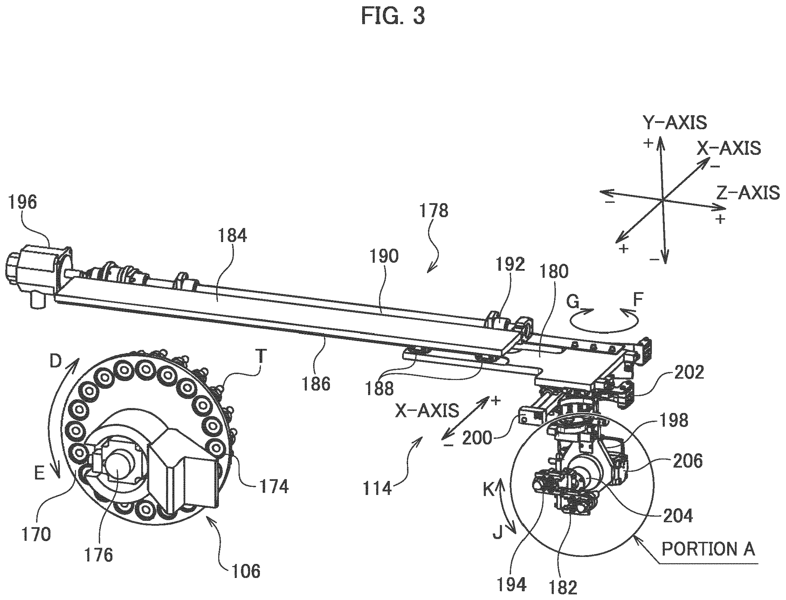

The tool storage unit 106 includes a holding plate 170 provided to be rotatable in a direction of an arrow D-E (a direction of rotation about the X-axis), holding pots 174 arranged at regular intervals on the peripheral edge of the holding plate 170, and a driving motor 176 (see FIG. 3) that rotates the holding plate 170. The holding pot 174 holds the tool T. The holding pot 174 protrudes to the negative side in the X-axis direction. The tool T in the holding pot 174 at a position PM is the target of attachment and detachment. The driving motor 176 rotates the holding plate 170, whereby each holding pot 174 can be indexed to the attachment/detachment position PM.

FIG. 3 is a perspective view of the tool storage unit 106 and the tool changing unit 114.

The tool changing unit 114 is provided on the negative side in the X-axis direction of the turret base 102 and the tool storage unit 106 (see FIG. 1). The tool changing unit 114 includes a feed mechanism 178 provided along the Z-axis, a movable base 180 that can be moved along the Z-axis by the feed mechanism 178, and a firsthand 182 and a second hand 194 attached to the movable base 180, for example.

The feed mechanism 178 includes a rail holding base 184 arranged parallel to the Z-axis, two guide rails 186 attached to a lower surface of the rail holding base 184 to be parallel to the Z-axis, two sliders 188 provided for each guide rail 186 to engage with that guide rail 186, a ball screw 190 arranged along the rail holding base 184, a ball nut 192 screwed to the ball screw 190, and a servo motor 196 coupled to an end of the ball screw 190 to rotate the ball screw 190 about an axis line. The sliders 188 are fixed to an upper surface of the movable base 180.

On a lower surface of the moving base 180, a holding member 198 is arranged to be rotatable in a direction of an arrow F-G (a direction of rotation about the Y-axis) and movable in the X-axis direction. The holding member 198 is driven in the X-axis direction by a moving cylinder 200. The holding member 198 is driven by a driving cylinder 202 via a mechanism such as a rack and pinion mechanism, and turns in the direction of the arrow F-G within an angular range of 90 degrees. That is, the holding member 198 is configured to be movable on an X-Z plane and rotatable in the F-G direction. FIG. 3 illustrates a state in which the holding member 198 has been rotated in the F direction.

A rotating shaft 204 is attached to the holding member 198 to penetrate therethrough. The rotating shaft 204 is driven by a driving cylinder 206 via a mechanism such as a rack and pinion mechanism, and rotates in a direction of an arrow J-K within an angular range of 180 degrees.

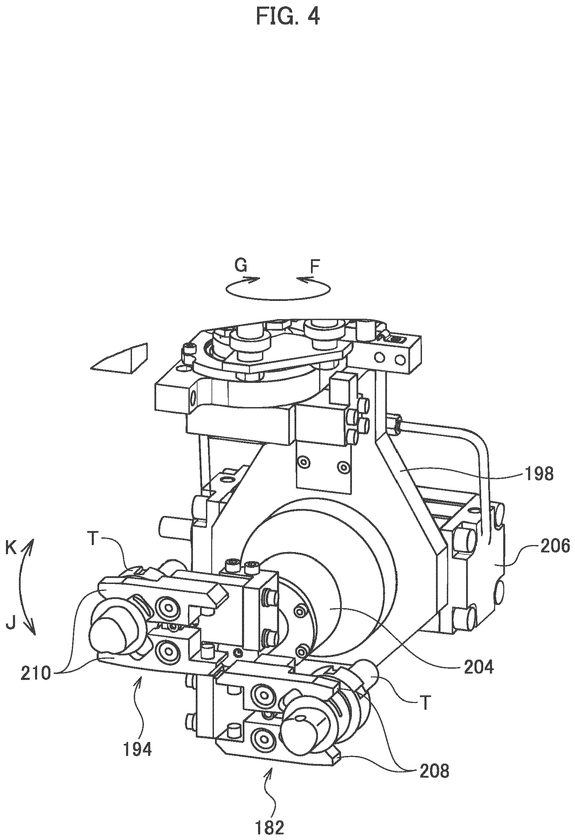

FIG. 4 is an enlarged perspective view of a portion A illustrated in FIG. 3.

The first hand 182 and the second hand 194 are attached to an end of the rotating shaft 204 to be point-symmetric with respect to the axis center of the rotating shaft 204 and be parallel to each other in a vertical direction. The first hand 182 and the second hand 194 have the same configuration as each other. The first hand 182 has a pair of gripping claws 208 for gripping the tool T and can grip the tool T with the gripping claws 208. Similarly, the second hand 194 also has a pair of gripping claws 210 and can grip the tool T with the gripping claws 210.

When the holding member 198 is rotated to the direction of the arrow F (the rotation state illustrated in FIGS. 3 and 4), the gripping claws 208 and 210 of the first and second hands 182 and 194 each have such a posture that it is along the Z-axis direction (an orthogonal direction orthogonal to the axis line direction of the tool T gripped by the gripping claws 208 or the like). When the holding member 198 is rotated to the direction of the arrow G, the gripping claws 208 and 210 of the first and second hands 182 and 194 each have such a posture that it is along the X-axis direction.

When the holding member 198 is at an end of movement on the positive side in the X-axis direction (this position is referred to as a "first X position") and at an end of rotation in the F direction, the tool T held in the holding pot 174 indexed to the attachment/detachment position PM can be gripped by the first hand 182 or the second hand 194.

Further, when the first hand 182 grips the tool T on its upper side and no tool T is held in the holding pot 174 at the attachment/detachment position PM, the tool T gripped by the first hand 182 can be accommodated in the holding pot 174 (an empty holding pot) at the attachment/detachment position PM.

It is assumed that the movable base 180 is located at an intermediate position between the turret 164 and the tool storage unit 106. Here, the holding member 198 is moved to an end of movement on the negative side in the X-axis direction (this position is referred to as a "second X position") and rotated to the end of rotation in the direction of the arrow F. Next, the movable base 180 is moved to the positive side in the Z-axis direction, and the axis center (the X-axis direction) of the tool T gripped by the first hand 182 is made to coincide with the axis center of the holding pot 174 (the Z coordinate at this time is referred to as a "first Z position"). Subsequently, the holding member 198 is moved to the positive side in the X-axis direction to the "first X position", and the tool T in the first hand 182 is attached to the empty holding pot 174 at the attachment/detachment position PM. Thereafter, the movable base 180 is moved to the negative side in the Z-axis direction (this position is referred to as a "second Z position"), whereby gripping of the tool T by the first hand 182 is released.

Meanwhile, when the first hand 182 is located on the upper side, no tool T is gripped by the gripping claws 208 of the first hand 182, and the tool T is held at the attachment/detachment position PM, the tool T at the attachment/detachment position PM can be taken out by the first hand 182.

It is assumed that the movable base 180 is located at an intermediate position between the turret 164 and the tool storage unit 106. Here, after the holding member 198 is rotated to the end of rotation in the direction of the arrow F (the rotation state illustrated in FIGS. 3 and 4) and the movable base 180 is moved to the "second Z position", the movable base 180 is moved to the "first X position" and then moved to the aforementioned "first Z position". Accordingly, the tool T attached at the attachment/detachment position PM enters an opening of the pair of gripping claws 208 and is gripped by the gripping claws 208. Next, the holding member 198 is moved to the "second X position". The tool T attached to the holding pot 174 is thus taken out from the holding pot 174 while being gripped by the pair of gripping claws 208.

As for the turret 164, in a case where the holder 168 indexed to the attachment/detachment position PT is of a type that holds the tool T along a radial direction, the tool T held in the holder 168 can be gripped by the first hand 182 or the second hand 194 positioned on the lower side when the holding member 198 of the tool changing unit 114 is at the "first X position" and at the end of rotation in the direction of the arrow F.

When the first hand 182 is positioned on the upper side, the second hand 194 is positioned on the lower side, the first hand 182 grips the tool T, the second hand 194 does not grip the tool T, and the tool T is held at the attachment/detachment position PT, it is possible to change the tool T gripped by the first hand 182 with the tool T held in the holder 168 at the attachment/detachment position PT.

It is assumed that the movable base 180 is located at an intermediate position between the turret 164 and the tool storage unit 106. Here, the holding member 198 is rotated to the end of rotation in the direction of the arrow F and is moved to the "second X position. In this state, the movable base 180 is moved to a predetermined position (this position is referred to as a "third Z position") set in the negative side in the Z-axis direction. The "third Z position" is located at such a position that, when the holding member 198 is moved to the "first X position", the second hand 194 positioned on the lower side is located on the positive side in the Z-axis direction of the tool T held in the holder 168, in other words, at a front position at which the second hand 194 does not interfere with the tool T.

After the holding member 198 is moved to the "first X position", the movable base 180 is moved to a predetermined position (this position is referred to as a "fourth Z position") set in the negative side in the Z-axis direction. Accordingly, the tool T at the attachment/detachment position PT enters an opening of the pair of gripping claws 210 and is gripped by the gripping claws 210. Next, when the holding member 198 is moved to the "second X position", the tool T attached to the holder 168 is taken out from the holder 168 by the pair of gripping claws 210.

Next, the driving cylinder 206 turns the first and second hands 182 and 194 upside down to position the second hand 194 on the upper side and position the first hand 182 on the lower side, and moves the holding member 198 to the "first X position". Accordingly, the tool T gripped by the first hand 182 is disposed at the attachment/detachment position PT. Subsequently, when the movable base 180 is moved to the "third Z position", gripping of the tool T by the first hand 182 is released. By the first change operation described above, the tool T gripped by the first hand 182 and the tool T at the attachment/detachment position PT are changed with each other. The tool T gripped by the second hand 194 can be accommodated in the tool storage unit 106 by the accommodating operation described above.

In a case where the holder 168 indexed to the attachment/detachment position PT of the turret 164 is of a type that holds the tool T along the Z-axis, the tool T held in this holder 168 can be gripped by the first hand 182 or the second hand 194 positioned on the lower side, when the holding member 198 is at an end of rotation in the direction of the arrow G and at the "first X position".

When the first hand 182 is positioned on the upper side, the second hand 194 is positioned on the lower side, the second hand 182 grips the tool T, the second hand 194 does not grip the tool T, and the tool T is held at the attachment/detachment position PT, it is possible to change the tool T gripped by the first hand 182 with the tool T at the attachment/detachment position PT.

It is assumed that the movable base 180 is located at an intermediate position between the turret 164 and the tool storage unit 106. Here, the holding member 198 is rotated to the end of rotation in the direction of the arrow G and is moved to the "second X position", and the movable base 180 is moved to the "third Z position" set in the negative side in the Z-axis direction. At this time, the second hand 194 is located at such a position that it can grip the tool T held in the holder 168.

Next, the holding member 198 is moved to the "first X position". The tool T at the attachment/detachment position PT thus enters the opening of the pair of gripping claws 210 and is gripped by the gripping claws 210. Thereafter, when the holding member 198 is moved to the "fourth Z position" set on the negative side in the Z-axis direction, the tool T attached to the holder 168 is taken out from the holder 168 by the pair of gripping claws 210.

Next, the driving cylinder 206 turns the first and second hands 182 and 194 upside down to position the second hand 194 on the upper side and position the first hand 182 on the lower side, and moves the movable base 180 to the "third Z position". Accordingly, the tool T gripped by the first hand 182 is attached at the attachment/detachment position PT. Subsequently, when the holding member 198 is moved to the "second X position", gripping of the tool T by the first hand 182 is released. By the second change operation described above, the tool T gripped by the second hand 182 and the tool T at the attachment/detachment position PT are changed with each other. The tool T gripped by the second hand 194 can be accommodated in the tool storage unit 106 by the accommodating operation described above.

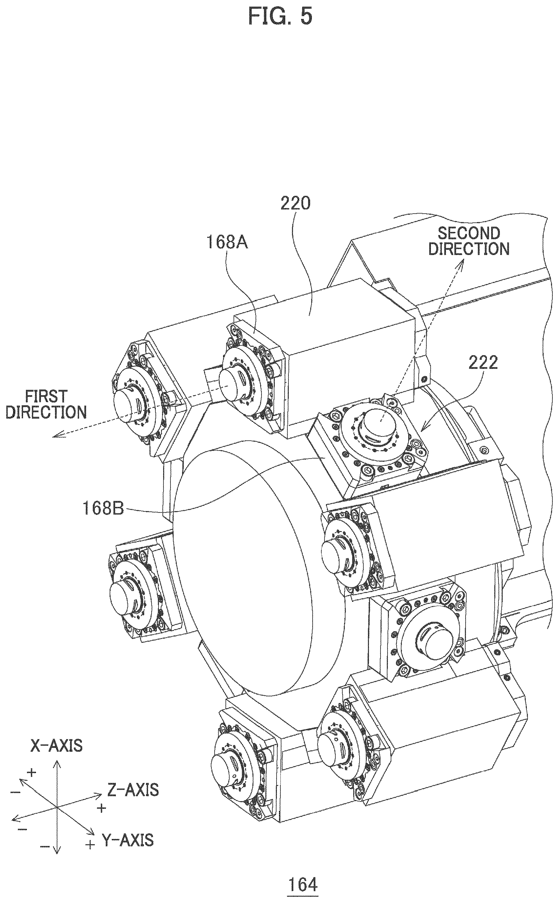

FIG. 5 is an external perspective view of the turret 164.

The turret 164 is connected to the turret base 102 to be rotatable about the Z-axis, as described above. The turret 164 has a shape of a dodecagonal prism and has 12 stations 222 (end faces) respectively formed on side surfaces. Each station 222 has an insertion hole. To the station 222, the holder 168 (a cylindrical perforated member illustrated in FIG. 5) may be inserted as it is, or a cartridge 220 (a box-shaped member illustrated in FIG. 5) may be inserted. The holder 168 may also be inserted into the cartridge 220. By inserting a shank portion of the tool T such as an endmill or a drill into the holder 168, 12 tools T are held by the turret 164. FIG. 5 illustrates a state where a tool with no cutting tool (hereinafter, a "dummy tool") is attached to each holder 168.

When the tool T is directly fixed to the station 222, the longitudinal direction of the tool T is coincident with the "second direction" that is the radial direction of the turret 164. In the following descriptions, the holder 168 directly inserted into the station 222 is referred to as a "second holder 168B". Meanwhile, when the tool T is fixed to the cartridge 220, the longitudinal direction of the tool T is coincident with the "first direction" that is the axial direction of the turret 164. The first direction is also coincident with the negative direction of the Z-axis in FIG. 5. In the following descriptions, the holder 168 inserted into the cartridge 220 is referred to as a "first holder 168A". The first holder 168A and the second holder 168B are the same parts as each other, but the direction of holding a tool of each holder is changed depending on whether that holder is fixed to the station 222 via the cartridge 220.

The tool T held by the first holder 168A cuts an inner-diameter side portion of a solid workpiece. The tool T extending in the second direction and held by the second holder 168B cuts an outer-diameter side portion of a solid workpiece. In the present embodiment, six of the first holders 168A and six of the second holders 168B are disposed in the turret 164. Accordingly, six of the tools T are used for inner diameter machining, and six of the tools T are used for outer diameter machining.

FIG. 6 is a hardware configuration diagram of the machine tool 100.

The machine tool 100 includes the information processing device 118, the machining control unit 116, the machining equipment 112, the tool changing unit 114, and the tool storage unit 106. The machining control unit 116 functioning as a numerical controller transmits a control signal to the machining equipment 112 in accordance with a machining program. The machining equipment 112 moves the turret base 102 to machine a workpiece in accordance with an instruction from the machining control unit 116. Further, the machining control unit 116 acquires a "tool pattern" indicating a combination of the tools T to be held by the turret 164 from a tool management unit 130 (described later). The machining control unit 116 causes the tool changing unit 114 to perform tool change in accordance with the tool pattern instructed from the tool management unit 130.

The information processing device 118 controls the machining control unit 116. In the present embodiment, the information processing device 118 provides a user interface function to an operator and manages tool patterns. The tool storage unit 106 stores spare tools therein. The tool changing unit 114 corresponds to a so-called ATC (Automatic Tool Changer). The tool changing unit 114 takes out a spare tool from the tool storage unit 106 and changes a work tool located at the change position of the turret 164 with the spare tool in accordance with a change instruction from the machining control unit 116.

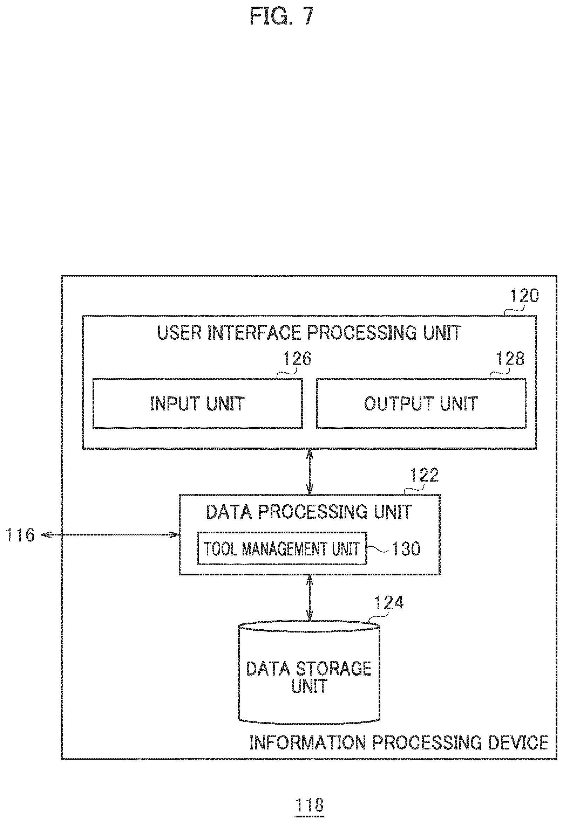

FIG. 7 is a functional block diagram of the information processing device 118.

The components of the information processing device 118 are implemented by hardware including computing units such as central processing units (CPUs) and various co-processors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks that are described below do not refer to configurations in units of hardware but to blocks in units of functions.

The components of the machining control unit 116 may also be implemented by hardware including computing units such as processors, storage devices such as memories and storages, and wired or wireless communication lines that connect these units and devices, and software that is stored in the storage devices and supplies processing instructions to the computing units. The machining control unit 116 may be configured as a device separate from the information processing device 118.

The information processing device 118 includes a user interface processing unit 120, a data processing unit 122, and a data storage unit 124.

The user interface processing unit 120 receives an operation made by a user and performs user-interface-related processing such as displaying an image and outputting audio. The data processing unit 122 performs various type of processing on the basis of data acquired by the user interface processing unit 120 and data stored in the data storage unit 124. The data processing unit 122 also functions as an interface of the user interface processing unit 120 and the data storage unit 124. The data storage unit 124 stores various types of programs and setting data therein.

The user interface processing unit 120 includes an input unit 126 and an output unit 128.

The input unit 126 receives input made by the user via a touch panel or a hardware device such as a handle. The output unit 128 provides various types of information to the user by displaying an image or outputting audio.

The data processing unit 122 includes the tool management unit 130. The tool management unit 130 manages tool patterns each indicating a combination of work tools to be held by the turret 164.

The data storage unit 124 retains a tool pattern for each machining program. The machining control unit 116 performs tool change in accordance with the specified tool pattern as appropriate during execution of the machining program. The data storage unit 124 also retains spare tool information related to the type and state (usable or unusable) of a spare tool stored in the tool storage unit 106.

There are two types of tool change in the present embodiment. One is tool change between the tool storage unit 106 and the turret 164, i.e., "external tool change" that is change between a work tool and a spare tool, and the other is tool change in the turret 164, i.e., "internal tool change" that is change between work tools (described later).

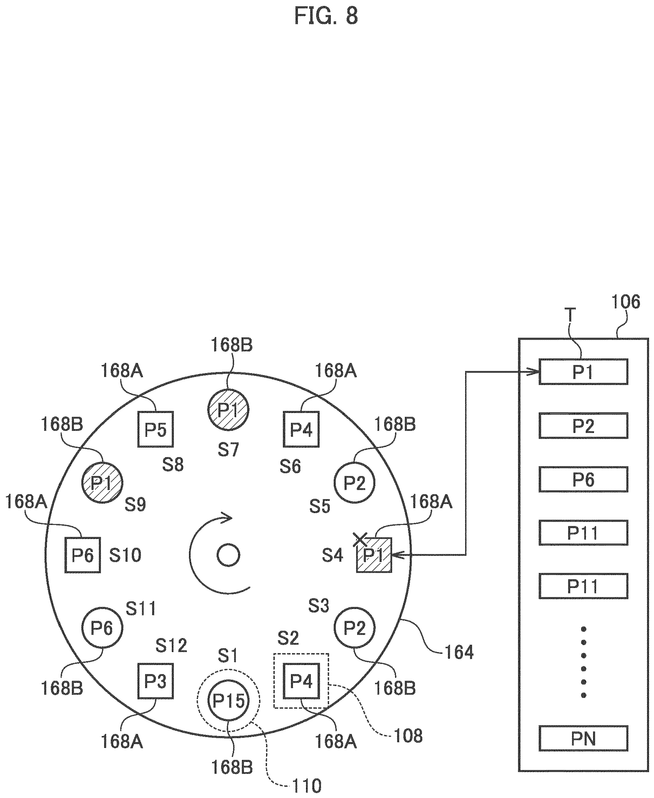

FIG. 8 is a schematic diagram for explaining external tool change in an unevenly distributed state.

As described above, the turret 164 is connected to the turret base 102 of the machine tool 100. The turret 164 is configured to be rotatable about its center axis. The turret 164 includes the 12 stations 222 each capable of holding the holder 168 or the cartridge 220. The work tool T is attached to the holder 168.

In FIG. 8, the first holders 168A (for inner diameter machining) are represented by squares, and the second holders 168B (for outer diameter machining) are represented by circles. Six first holders 168A and six second holders 168B are alternately attached to the turret 164 illustrated in FIG. 8.

The tool T is attached to the first holder 168A for inner diameter machining or the second holder 168B for outer diameter machining. The first holder 168A is inserted into the cartridge 220, and the cartridge 220 is attached to the station 222. The second holder 168B is directly attached to the station 222. In FIG. 8, a model number indicating the type of a tool is represented as "P". A work tool T having a model number P15 (hereinafter, a "work tool T (P15)") is attached in the second direction to a station 222 corresponding to a station number S1 (hereinafter, a "station 222 (S1)"). Since the second holder 168B for outer diameter machining is attached to the station 222 (S1), the work tool T (P15) is used for outer diameter machining.

Similarly, a work tool T (P4) is attached to a station 222 (S2) in the first direction (for inner diameter machining), and a work tool T (P2) is attached to a station 222 (S3) in the second direction (for outer diameter machining).

The turret base 102 machines a workpiece with the work tool T corresponding to a predetermined machining position 110. In FIG. 8, outer diameter machining of the workpiece is performed with the work tool T (P15) located at the station 222 (S1). The machine tool 100 moves the turret base 102 and applies the work tool T (P15) to a predetermined position of the workpiece at a predetermined angle, thereby machining an outer-diameter side portion of the workpiece. In order to perform inner diameter machining of the workpiece with the other work tool T (P4), it suffices that the machine tool 100 rotates the turret 164 to index the work tool T (P4) to the machining position 110.

The work tool T corresponding to a change position 108 is a target of external tool change. The tool storage unit 106 that is also called a tool magazine, in general, has a number of spare tools T stored therein. For example, when a spare tool T (P11) is to be attached to the turret base 102, the machine tool 100 stores the work tool T (P4) at the change position 108 (station 222 (S2)) (corresponding to the "attachment/detachment position PT") in the tool storage unit 106, and attaches the spare tool T (P11) to the station 222 (S2) corresponding to the change position 108.

As described above, the machine tool 100 machines a workpiece, while changing a relative distance and a relative angle between the workpiece and the work tool T by moving the turret base 102. Further, the machine tool 100 selects one of the 12 work tools T which is to be used by rotating the turret 164. In inner diameter machining of a workpiece, the work tool T held by the first holder 168A is selected. In outer diameter machining, the work tool T held by the second holder 168B is selected. The tool management unit 130 registers in advance information indicating which station 222 has the cartridge 220 disposed therein in the turret 164, in other words, information indicating which one of the first holder 168A and the second holder 168B is set for each station number in the data storage unit 124.

The work tools T and the spare tools T can be changed with each other at any time. By storing a large number of spare tools T in the tool storage unit 106 having a large capacity, various types of machining can be realized by one machine tool 100. Meanwhile, by attaching 12 types of work tools T that are relatively frequently used to the turret 164, it is possible to reduce loss of time associated with external tool change.

In particular, as for the tool T that is frequently used, a plurality of the tools T may be attached to the turret 164 at the same time. In FIG. 8, three work tools T (P1) are held at a station 222 (S9), a station 222 (S7), and a station 222 (S4), respectively. The second holder 168B (for outer diameter machining) is attached to each of the station 222 (S9) and the station 222 (S7), and the first holder 168A (for inner diameter machining) is attached to the station 222 (S4). That is, one of the three work tools T (P1) is attached in the first direction (the first holder 168A), and the other two are attached in the second direction (the second holder 168B). The above-described state where a plurality of tools T of the same type are attached to the first holder(s) 168A and the second holder(s) 168B in a distributed manner and the number of the tools T attached to one of the holders is larger than the number of the tools T attached to the other holders is referred to as an "unevenly distributed state".

The work tool T (P1: S7) and the work tool T (P1: S9) are both for outer diameter machining, and one of them serves as a spare. For example, continuous use of the work tool T (P1: S7) may become impossible during outer diameter machining. The tool management unit 130 counts for each tool T the number of times that the tool T is indexed to the machining position 110 and becomes a tool to be used. When this number of uses reaches a threshold, the tool management unit 130 determines this tool as a tool that is not to be used any longer (hereinafter, an "unused tool"). Since a tool is also worn in association with machining of a workpiece, the threshold (limit value) of the number of uses is set for each tool in advance. When the work tool T (P1: S7) is determined as an unused tool, the tool management unit 130 issues an instruction to set the work tool T (P1: S9) at the machining position 110 and causes outer diameter machining of the workpiece to be continued.

As described above, by attaching the two work tools (P1) to the turret 164 as tools for outer diameter machining, the work efficiency can be easily maintained because, even when one of the work tools T (P1) becomes an unused tool, the other work tool T (P1) can be used immediately.

Meanwhile, the work tool T (P1: S4) is for inner diameter machining and is the only one for inner diameter machining. That is, when the work tool T (P1: S4) for inner diameter machining that is the only one tool in an unevenly distributed state is determined as an unused tool, inner diameter machining of a workpiece cannot be continued.

In this situation, when external tool change is possible, the tool management unit 130 changes the work tool T (P1: S4) that has become an unused tool with the spare tool T (P1) stored in the tool storage unit 106. That is, when the work tools T (P1) are unevenly distributed, and the work tool T (P1: S4) for inner diameter machining that is the only one tool on the minority side becomes an unused tool, the tool management unit 130 instructs the machining control unit 116 to set the unused tool T (P1: S4) at the change position 108. Subsequently, the tool management unit 130 instructs the machining control unit 116 to perform external tool change between the spare tool T (P1) stored in the tool storage unit 106 and the unused tool T (P1: S4) set at the change position 108. After external tool change, the work tool T (P1) is held at the station 222 (S4) as a tool for inner diameter machining, so that inner diameter machining of a workpiece can be performed.

Further, when the unused tool T (P1) is stored in the tool storage unit 106, the tool management unit 130 updates spare tool information and sets a flag "unusable" for the spare tool T (P1) newly stored. In addition, the tool management unit 130 also registers the number of uses for each tool T in the data storage unit 124 every time the tool management unit 130 updates the number of uses for each tool T.

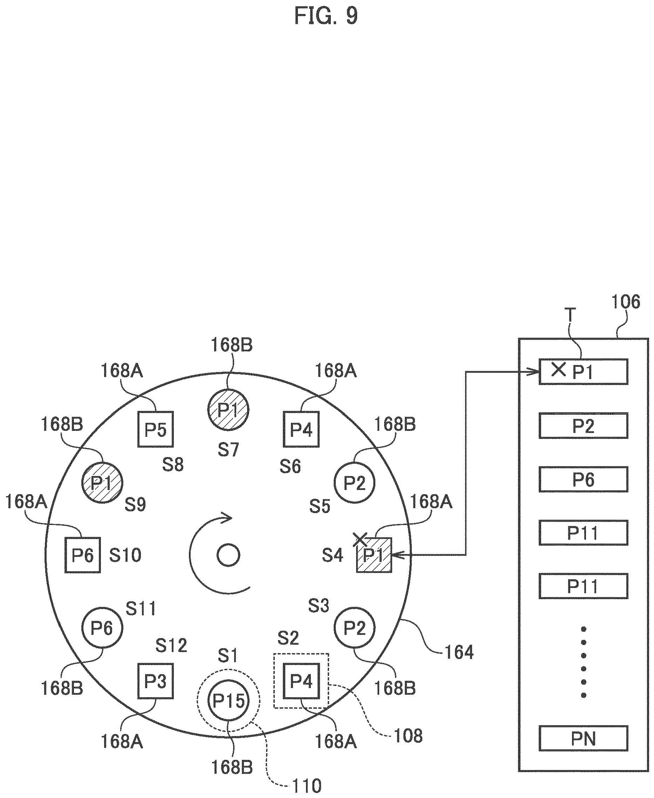

FIG. 9 is a schematic diagram for explaining internal tool change in an unevenly distributed state.

In the unevenly distributed state identical to that in FIG. 8, when there is no spare tool T (P1) or no usable spare tool T (P1) in the tool storage unit 106, the tool management unit 130 performs internal tool change. Specifically, the tool management unit 130 instructs the machining control unit 116 to change the work tool T (P1: S4) for inner diameter machining that has become an unused tool with the work tool T (P1: S9) for outer diameter machining that is usable.

The tool management unit 130 may select the work tool T (P1: S7) as a target of tool change in place of the work tool T (P1: S9). The tool management unit 130 may select one of the work tool T (P1: S9) and the work tool T (P1: S7) whose number of uses is smaller, as a target of tool change.

As a result of internal tool change, the unused tool T (P1) is held at the station 222 (S9: second holder 168B), and the other two work tools T (P1) that are usable are held at the station 222 (S7: second holder 168B) and the station 222 (S4: first holder 168A). As a result of internal tool change, the usable work tools T are set in both the first holder 168A and the second holder 168B, and therefore both inner diameter machining and outer diameter machining can be continued for a workpiece.

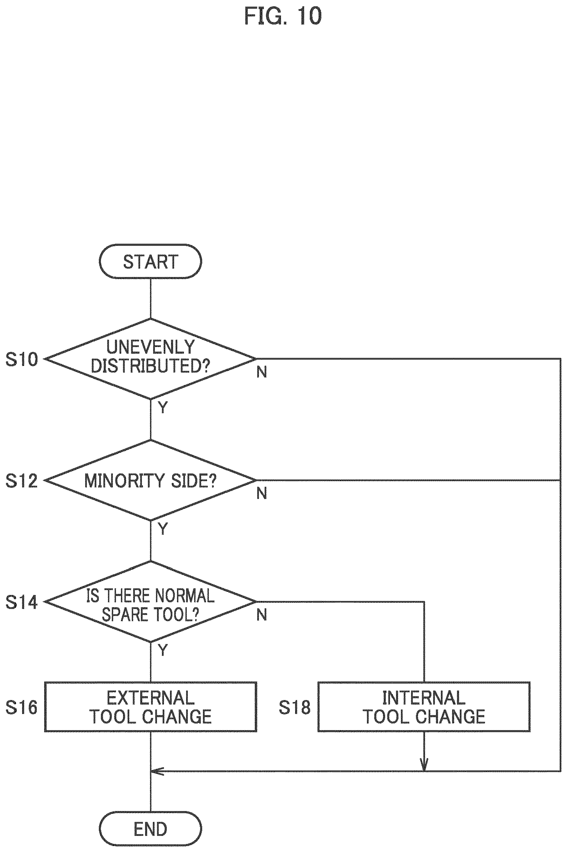

FIG. 10 is a flowchart illustrating processes when an unused tool is detected.

When the tool management unit 130 detects an unused tool, that is, the number of uses of any tool T reaches a threshold, the processes illustrated in FIG. 10 are performed. Here, a description is provided assuming that the work tool T (P1) has become an unused tool during machining.

When the work tools T (P1) are not unevenly distributed (N at S10), the following processes are skipped. When the work tools T (P1) are unevenly distributed (Y at S10), the tool management unit 130 determines whether the unused tool T (P1) belongs to a majority side or a minority side (S12). When the unused tool T (P1) belongs to the majority side (N at S12), the following processes are skipped.

When the unused tool T (P1) belongs to the minority side (Y at S12), the tool management unit 130 determines whether there is a normal (usable) spare tool T (P1) in the tool storage unit 106 (S14). When there is a normal spare tool T (P1) (Y at S14), the tool management unit 130 instructs the machining control unit 116 to perform external tool change (S16). The machining control unit 116 causes the tool changing unit 114 to change the unused tool T (P1) with the spare tool T (P1), and the tool management unit 130 registers the unused tool T (P1) as being "unusable" in spare tool information. When there is no normal spare tool T (P1) (N at S14), the tool management unit 130 instructs the machining control unit 116 to perform internal tool change (S18).

In internal tool change, the tool changing unit 114 changes the unused tool T (P1) on the minority side with the tool T (P1) on the majority side, as described above. More specifically, the tool changing unit 114 pulls out the tools T (P1) that are targets of tool change from the respective holders 168 by means of the first hand 182 and the second hand 194, inserts the unused tool T (P1) on the minority side into the holder 168 on the majority side, and inserts the tool T (P1) on the majority side into the holder 168 on the minority side. With this process, internal tool change is performed.

### [Summarization]

The machine tool 100 has been described above on the basis of the embodiment.

In a case where the plural tools T of the same type are unevenly distributed on the turret 164, machining of a workpiece may not be able to be continued when the tool T on the minority side becomes an unused tool during machining. In this situation, when external tool change is possible, the tool changing unit 114 changes the unused tool T with the spare tool T. When external tool change has been performed, the unused tool T has been stored in the tool storage unit 106, and all the work tools T on the turret 164 have become usable. Therefore, machining of a workpiece can be continued.

Meanwhile, when external tool change is impossible, the tool changing unit 114 performs internal tool change on the turret 164. Accordingly, a situation can be avoided in which the tool T on the minority side becomes unusable and thus machining of a workpiece cannot be continued. The two-step countermeasure including external tool change and internal tool change facilitates continuation of machining work even when an unused tool is detected.

In many cases, the tools T (P1) of the same type are used for both inner diameter machining and outer diameter machining. In these cases, by causing both the first holder 168A and the second holder 168B to hold the tools T (P1) of the same type, it is possible to perform inner diameter machining and outer diameter machining with the tools T (P1) without performing external tool change. However, when either the tool T (P1) in the first holder 168A or the tool T (P1) in the second holder 168B becomes an unused tool, external tool change has to be performed.

In a case where outer diameter machining is more frequently performed than inner diameter machining, one of the tools T (P1) is arranged in the first holder 168A (for inner diameter machining) and two of the tools T (P1) are arranged in the second holders 168B (for outer diameter machining). This arrangement allows machining of a workpiece to be continued without performing external tool change because, even if the tool T (P1) for outer diameter machining becomes an unused tool, it suffices to use the other tool T (P1) for outer diameter machining.

If two of the tools T (P1) are also held in the first holders 168A (for inner diameter machining), reliability is more improved. However, there are cases where it is desired to hold as many types of tools T as possible on the turret 164. For this reason, it is not necessarily reasonable to give a margin in the number to the tools T not only for outer diameter machining but also for inner diameter machining. In the present embodiment, when the tool T in the first holder 168A (for inner diameter machining) as the minority side becomes an unused tool, external tool change is performed, and thus machining of a workpiece is continued. When it is also impossible to perform external tool change, one of the tools T (P1) for outer diameter machining that can afford to be switched is switched to a tool for inner diameter machining by internal tool change, whereby machining of a workpiece is continued. As described above, according to the machine tool 100 in the present embodiment, at least three tools T (P1) that are frequently used are attached to the turret 164. This arrangement enables variety of tools T to be attached to a limited number of the stations 222 of the turret 164 and can improve continuity of machining in a reasonable manner.

In addition, since normal tools can be efficiently used, the number of tool change operations in the middle of machining is reduced, so that the total time involved in machining can be shortened. Consequently, the operating time of a machine tool can be shortened, which leads to energy saving.

The present invention is not limited to the embodiments described above and modifications thereof, and any component thereof can be modified and embodied without departing from the scope of the invention. Components described in the embodiments and modifications can be combined as appropriate to form various embodiments. Some components may be omitted from the components presented in the embodiments and modifications.

### [Modification]

In the present embodiment, tool change has been described in a case where the tools T for outer diameter machining form the majority side, the tools T for inner diameter machining form the minority side, and one of the tools T for inner diameter machining becomes an unused tool. The present invention is not limited thereto. The same applies to a case where the tools T for inner diameter machining form the majority side, the tools T for outer diameter machining form the minority side, and one of the tools T for outer diameter machining becomes an unused tool. In this case, the tool changing unit 114 performs external tool change to change the unused tool T for outer diameter machining with the spare tool T stored in the tool storage unit 106. When external tool change is impossible, it suffices that the tool changing unit 114 performs internal tool change to change the unused tool T for outer diameter machining with the tool T for inner diameter machining (on the majority side).

In the present embodiment, the first holder 168A and the second holder 168B have been described as the "holder 168 that holds a tool for cutting an inner-diameter side portion of a workpiece" and the "holder 168 that holds a tool for cutting an outer-diameter side portion of a workpiece", respectively. The present invention is applicable not only to the inner-diameter side portion/ outer-diameter side portion but also to a case where a plurality of tool holding methods are possible on the turret 164.

For example, an unevenly distributed state also occurs when the long axis direction (first direction) of the first holder 168A and the long axis direction (second direction) of the second holder 168B are different from each other. The first direction and the second direction described here are any directions, and may not be orthogonal to each other.

In addition, the unevenly distributed state may occur due to a difference in use, for example, a difference between turning and rotation. Some tools T can be used for both turning and rotary machining. When a turning holder 168M is attached to the station 222 and the tool T is attached to the turning holder 168M, this tool T is used for turning. Meanwhile, when a rotary holder 168N is attached to the station 222 and the tool T of the same type is attached to the rotary holder 168N, this tool T is used for rotary machining.

For example, it is assumed that two of the three tools T (P1) are held by the turning holders 168M and one is held by the rotary holder 168N. In such an unevenly distributed state, when the tool T (P1) held by the rotary holder 168N as the minority side becomes an unused tool, external tool change or internal tool change is performed by processes identical to those in the flowchart illustrated in FIG. 10.

The same applies to a case where two of the three tools T (P1) are held by the rotary holders 168N and one is held by the turning holder 168M. Also when the tool T (P1) held by the turning holder 168M on the minority side becomes an unused tool, the machining control unit 116 performs external tool change or internal tool change to set the normal tool T (P1) in the turning holder 168M, whereby both turning and rotary machining can be continued for a workpiece.

In the above descriptions, the state in which the three tools T (P1) are separated into two and one and are disposed in the first and second holders 168A and 168B or in the turning holder(s) 168M and the rotary holder(s) 168N has been described as the unevenly distributed state. The unevenly distributed state is not limited to the state where the three tools are separated into two and one, and also includes a state where the plural tools T (P1) of the same type are held on the majority side and the minority side to be separated into, for example, three and one or three and two. The tool management unit 130 causes external tool change or internal tool change to be performed when one of the tools T (P1) on the minority side becomes an unused tool.

In the descriptions of the present embodiment, the possibility of external tool change is examined, and internal tool change is performed when external tool change is impossible. In a modification, the tool management unit 130 may preferentially perform internal tool change and, when internal tool change is impossible, perform external tool change. Alternatively, in an unevenly distributed state, the tool management unit 130 may not perform external tool change but perform internal tool change only.

In the descriptions of the present embodiment, when the number of uses of the tool T reaches a threshold, the tool management unit 130 determines this tool T as an "unused tool". The present invention is not limited thereto. The tool management unit 130 may measure the usage time of the tool T, for example, the time during which the tool T is set at the machining position 110 as the usage time, and may determine this tool T as an unused tool when this usage time reaches a threshold. The machine tool 100 may inspect the tool length at any timing during machining as appropriate. When the tool length is shortened by wear to a predetermined length or less, the tool management unit 130 may regard this tool T as an unused tool.

In the descriptions of the present embodiment, external tool change or internal tool change is performed in an unevenly distributed state where the plural tools of the same type are attached on both the inner-diameter side and the outer-diameter side, and the number of the attached tools on one of the sides is larger than the number of the attached tools on the other side. Attaching of tools is not limited to the inner-diameter side and the outer-diameter side. External tool change and internal tool change described in relation to FIGS. 8 and 9 and the like can also be applied as long as a plurality of tools of the same type are attached in a distributed manner with a plurality of methods such as turning and rotary machining, inner diameter machining and turning, inner diameter machining and rotary machining, outer diameter machining and turning, and outer diameter machining and rotary machining.

Further, not only in the unevenly distributed state but also in the following situation, it is desirable to perform internal tool change so as to prevent uneven distribution of unused tools for one of the two types of attaching methods such as methods for the inner-diameter side and the outer-diameter side.

It is assumed that tools are attached to the stations 222 (S1) to 222 (S5) of the turret 164 in the following manner.
Station 222 (S1: outer-diameter side): unused tool (T1: P1)
Station 222 (S2: outer-diameter side): unused tool (T2: P1)
Station 222 (S3: outer-diameter side): unused tool (T3: P1)
Station 222 (S4: inner-diameter side): normal tool (T4: P1)
Station 222 (S5: inner-diameter side): normal tool (T5: P1)

It is also assumed that external tool change cannot be performed because there is no normal tool (P1) in the tool storage unit 106.

Since three tools (T1: P1) to (T3: P1) for the outer-diameter side attached to the turret 164 are all unused tools, outer diameter machining cannot be continued. Meanwhile, since two tools (T4: P1) and (T5: P1) for the inner-diameter side are both normal tools, the tools are sufficient for inner diameter machining.

In this situation, the machining control unit 116 performs internal tool change to change the unused tool (P1) held at the station 222 for outer-diameter side with the normal tool (P1) held at the station 222 for inner-diameter side. When internal tool change has been performed between the station 222 (S1: outer-diameter side) and the station 222 (S4: inner-diameter side), the tool arrangement at the stations 222 (S1) to 222 (S5) of the turret 164 is as described below.
Station 222 (S1: outer-diameter side): normal tool (T4: P1)
Station 222 (S2: outer-diameter side): unused tool (T2: P1)
Station 222 (S3: outer-diameter side): unused tool (T3: P1)
Station 222 (S4: inner-diameter side): unused tool (T1: P1)
Station 222 (S5: inner-diameter side): normal tool (T5: P1)

After the above-described internal tool change, normal tools can be arranged for both the inner-diameter side and the outer-diameter side, and therefore both inner diameter machining and outer diameter machining can be performed.

In this case, since the tool (T2: P1), the tool (T3: P1), and the tool (T1: P1) respectively held at the station 222 (S2: outer-diameter side), the station 222 (S3: outer-diameter side), and the station 222 (S4: inner-diameter side) are unusable, the machining control unit 116 executes control so as to prevent the station 222 (S2: outer-diameter side), the station 222 (S3: outer-diameter side), and the station 222 (S4: inner-diameter side) from being indexed to the machining position 110.

As another example, it is assumed that tools are attached to the stations 222 (S1) to 222 (S5) of the turret 164 in such a manner that the same number of tools are assigned to the inner-diameter side and the outer-diameter side as described below.
Station 222 (S1: outer-diameter side): unused tool (T1: P1)
Station 222 (S2: outer-diameter side): unused tool (T2: P1)
Station 222 (S4: inner-diameter side): normal tool (T4: P1)
Station 222 (S5: inner-diameter side): normal tool (T5: P1)

It is also assumed that external tool change cannot be performed because there is no normal tool (P1) in the tool storage unit 106.

Since two tools (T1: P1) and (T2: P1) for the outer-diameter side attached to the turret 164 are both unused tools, outer diameter machining cannot be continued. Meanwhile, since two tools (T4: P1) and (T5: P1) for the inner-diameter side are both normal tools, the tools are sufficient for inner diameter machining.

Also in this situation, the machining control unit 116 performs internal tool change to change the unused tool (P1) held at the station 222 for outer-diameter side with the normal tool (P1) held at the station 222 for inner-diameter side. When internal tool change has been performed between the station 222 (S1: outer-diameter side) and the station 222 (S4: inner-diameter side), the tool arrangement at the stations 222 (S1) to 222 (S5) of the turret 164 is as described below.
Station 222 (S1: outer-diameter side): normal tool (T4: P1)
Station 222 (S2: outer-diameter side): unused tool (T2: P1)
Station 222 (S4: inner-diameter side): unused tool (T1: P1)
Station 222 (S5: inner-diameter side): normal tool (T5: P1)

After the above-described internal tool change, normal tools can be arranged for both the inner-diameter side and the outer-diameter side, and therefore both inner diameter machining and outer diameter machining can be performed.

It is assumed that a machining spindle of the turret 164 illustrated in FIG. 5 is a left spindle. In FIG. 5, a tool for inner diameter machining is inserted into the first holder 168A rightward (to the positive side in the Z-axis direction), and therefore that tool faces left (to the negative side in the Z-axis direction). The present invention is not limited to the left spindle, but can also be applied to a right spindle.

The present invention can also be applied to the turret 164 having three types of holders 168, i.e., the first holder 168A facing right and the first and second holders 168A and 168B facing left, in other words, the turret 164 capable of being used for both a right spindle and a left spindle.

A cap member for closing a hole into which a shank of a tool is to be inserted may be attached to the holder 168. Although an ordinary tool with a blade may be attached to the holder 168 in place of a cap, it is preferable to use the cap member because the ordinary tool is more likely to cause interference than the cap member. Further, a dummy tool may be attached to the holder 168 in place of the cap member as described above. In a case of the dummy tool, it can be attached to the turret 164 by a tool change method by the tool changing unit 114 (ATC). By attaching the cap member or the dummy tool, it is possible to prevent chips and oil from entering the hole of the holder 168 during machining.

## Claims

1. A machine tool (100) comprising:
a tool rest (102, 164) including a first holder (168A) configured to hold a tool for cutting an inner-diameter side portion of a workpiece and a second holder (168B) configured to hold a tool for cutting an outer-diameter side portion of a workpiece;
a machining control unit (116) configured to control a tool attached to the tool rest (102, 164) to machine a workpiece in accordance with a machining program;
a tool changing unit (114) configured to change holding positions of a plurality of tools between holders of the tool rest (102, 164); and
a tool management unit (130) configured to identify an unusable tool in the tools held by the tool rest (102, 164), the unusable tool being a tool not to be used, wherein
in a case where a plurality of tools of a same type are held by both the first and second holders (168), when a number of the first holders (168A) in holders as holding targets is larger than a number of the second holders (168B) in the holders as the holding targets, and one of the tools held by the second holders (168B) is identified as the unusable tool, the tool changing unit (114) changes the unusable tool in the second holder (168B) with the tool in the first holder (168A).

2. A machine tool (100) comprising:
a tool rest (102, 164) including a first holder (168A) configured to hold a tool for cutting an inner-diameter side portion of a workpiece and a second holder (168B) configured to hold a tool for cutting an outer-diameter side portion of a workpiece;
a machining control unit (116) configured to control a tool held by the tool rest (102, 164) to machine a workpiece in accordance with a machining program;
a tool changing unit (114) configured to change holding positions of a plurality of tools between holders of the tool rest (102, 164); and
a tool management unit (130) configured to identify an unusable tool in the tools held by the tool rest (102, 164), the unusable tool being a tool not to be used, wherein
in a case where a plurality of tools of a same type are held by both the first and second holders (168), when a number of the second holders (168B) in holders as holding targets is larger than a number of the first holders (168A) in the holders as the holding targets, and one of the tools held by the first holders (168A) is identified as the unusable tool, the tool changing unit (114) changes the unusable tool in the first holder (168A) with the tool held by the second holder (168B).

3. A machine tool (100) comprising:
a tool rest (102, 164) including a first holder (168A) configured to allow a shank portion of a tool to be inserted thereinto in a first direction to hold the tool and a second holder (168B) configured to allow a shank portion of a tool to be inserted thereinto in a second direction different from the first direction to hold the tool;
a machining control unit (116) configured to control a tool held by the tool rest (102, 164) to machine a workpiece in accordance with a machining program;
a tool changing unit (114) configured to change holding positions of a plurality of tools between holders of the tool rest (102, 164); and
a tool management unit (130) configured to identify an unusable tool in the tools held by the tool rest (102, 164), the unusable tool being a tool not to be used, wherein
in a case where a plurality of tools of a same type are held by both the first and second holders (168), when a number of the first holders (168A) in holders as holding targets is larger than a number of the second holders (168B) in the holders as the holding targets, and one of the tools attached to the second holders (168B) is identified as the unusable tool, the tool changing unit (114) changes the unusable tool in the second holder (168B) with the tool in the first holder (168A).

4. A machine tool (100) comprising:
a tool rest (102, 164) including a turning holder (168) configured to fix a tool to allow the tool to perform turning and a rotary holder (168) configured to fix a tool to allow the tool to perform rotary machining;
a machining control unit (116) configured to control a tool held by the tool rest (102, 164) to machine a workpiece in accordance with a machining program;
a tool changing unit (114) configured to change holding positions of a plurality of tools between holders of the tool rest (102, 164); and
a tool management unit (130) configured to identify an unusable tool in the tools held by the tool rest (102, 164), the unusable tool being a tool prohibited from use, wherein
in a case where a plurality of tools of a same type are held by both the turning holder and the rotary holder, when a number of one of the turning holders (168) and the rotary holders (168) as holding targets is larger than a number of the other, and one of the tools attached to holders (168) on a minority side is identified as the unusable tool, the tool changing unit (114) changes the unusable tool in the holder (168) on the minority side with the tool in the holder (168) on a majority side.

5. The machine tool (100) according to claim 3, wherein
the first direction is one of a radial direction and an axial direction of the tool rest, and
the second direction is the other of the radial direction and the axial direction of the tool rest.

6. The machine tool (100) according to any one of claims 1 to 3, further comprising a tool storage unit (106) capable of storing a plurality of tools therein, wherein
when a tool of a same type as the tools held by both the first and second holders (168) is stored in the tool storage unit (106) as a usable tool, the tool changing unit (114) changes the unusable tool held by the first or second holder (168) with the usable tool in the tool storage unit (106).

7. The machine tool (100) according to claim 6, wherein the tool changing unit (114) performs tool change between the tool in the first holder (168A) and the tool in the second holder (168B) under a condition that the usable tool is not stored in the tool storage unit (106).

8. The machine tool (100) according to claim 4, further comprising a tool storage unit (106) capable of storing a plurality of tools therein, wherein
when a tool of a same type as the tools held by both the turning holder and the rotary holder (168) is stored in the tool storage unit (106) as a usable tool, the tool changing unit (114) changes the unusable tool held by the turning holder or the rotary holder with the usable tool in the tool storage unit (106).

9. The machine tool (100) according to claim 8, wherein the tool changing unit (114) performs tool change between the tool in the turning holder and the tool in the rotary holder under a condition that the usable tool is not stored in the tool storage unit (106).

## Patentansprüche

1. Werkzeugmaschine (100), umfassend:
eine Werkzeughalterung (102, 164), die einen ersten Halter (168A) aufweist, der dazu eingerichtet ist, ein Werkzeug zum Schneiden eines innendurchmesserseitigen Abschnitts eines Werkstücks zu halten, und einen zweiten Halter (168B) aufweist, der dazu eingerichtet ist, ein Werkzeug zum Schneiden eines außendurchmesserseitigen Abschnitts eines Werkstücks zu halten;
eine Bearbeitungssteuereinheit (116), die dazu eingerichtet ist, ein an der Werkzeughalterung (102, 164) angebrachtes Werkzeug zu steuern, um ein Werkstück gemäß einem Bearbeitungsprogramm zu bearbeiten;
eine Werkzeugwechseleinheit (114), die dazu eingerichtet ist, die Haltepositionen mehrerer Werkzeuge zwischen Haltern der Werkzeughalterung (102, 164) zu wechseln; und
eine Werkzeugverwaltungseinheit (130), die dazu eingerichtet ist, ein nicht-verwendbares Werkzeug unter den durch die Werkzeughalterung (102, 164) gehaltenen Werkzeugen zu identifizieren, wobei das nicht-verwendbare Werkzeug ein Werkzeug ist, das nicht verwendet werden soll, wobei
in einem Fall, in dem mehrere Werkzeuge eines selben Typs sowohl durch die ersten als auch die zweiten Halter (168) gehalten werden, wenn eine Anzahl der ersten Halter (168A) unter Haltern als Halteziele größer ist als eine Anzahl der zweiten Halter (168B) unter den Haltern als die Halteziele, und eines der durch die zweiten Halter (168B) gehaltenen Werkzeuge als das nicht-verwendbare Werkzeug identifiziert ist, die Werkzeugwechseleinheit (114) das nicht-verwendbare Werkzeug in dem zweiten Halter (168B) gegen das Werkzeug in dem ersten Halter (168A) austauscht.

2. Werkzeugmaschine (100), umfassend:
eine Werkzeughalterung (102, 164), die einen ersten Halter (168A) aufweist, der dazu eingerichtet ist, ein Werkzeug zum Schneiden eines innendurchmesserseitigen Abschnitts eines Werkstücks zu halten, und einen zweiten Halter (168B) aufweist, der dazu eingerichtet ist, ein Werkzeug zum Schneiden eines außendurchmesserseitigen Abschnitts eines Werkstücks zu halten;
eine Bearbeitungssteuereinheit (116), die dazu eingerichtet ist, ein durch die Werkzeughalterung (102, 164) gehaltenes Werkzeug zu steuern, um ein Werkstück gemäß einem Bearbeitungsprogramm zu bearbeiten;
eine Werkzeugwechseleinheit (114), die dazu eingerichtet ist, die Haltepositionen mehrerer Werkzeuge zwischen Haltern der Werkzeughalterung (102, 164) zu wechseln; und
eine Werkzeugverwaltungseinheit (130), die dazu eingerichtet ist, ein nicht-verwendbares Werkzeug unter den durch die Werkzeughalterung (102, 164) gehaltenen Werkzeugen zu identifizieren, wobei das nicht-verwendbare Werkzeug ein Werkzeug ist, das nicht verwendet werden soll, wobei
in einem Fall, in dem mehrere Werkzeuge eines selben Typs sowohl durch die ersten als auch die zweiten Halter (168) gehalten werden, wenn eine Anzahl der zweiten Halter (168B) unter Haltern als Halteziele größer ist als eine Anzahl der ersten Halter (168A) unter den Haltern als die Halteziele, und eines der durch die ersten Halter (168A) gehaltenen Werkzeuge als das nicht-verwendbare Werkzeug identifiziert ist, die Werkzeugwechseleinheit (114) das nicht-verwendbare Werkzeug in dem ersten Halter (168A) gegen das durch den zweiten Halter (168B) gehaltene Werkzeug austauscht.

3. Werkzeugmaschine (100), umfassend:
eine Werkzeughalterung (102, 164), die einen ersten Halter (168A) aufweist, der dazu eingerichtet ist, das Einsetzen eines Schaftabschnitts eines Werkzeugs in ihn in einer ersten Richtung zu erlauben, um das Werkzeug zu halten, und einen zweiten Halter (168B) aufweist, der dazu eingerichtet ist, das Einsetzen eines Schaftabschnitts eines Werkzeugs in ihn in einer zweiten Richtung zu erlauben, die von der ersten Richtung verschieden ist, um das Werkzeug zu halten;
eine Bearbeitungssteuereinheit (116), die dazu eingerichtet ist, ein durch die Werkzeughalterung (102, 164) gehaltenes Werkzeug zu steuern, um ein Werkstück gemäß einem Bearbeitungsprogramm zu bearbeiten;
eine Werkzeugwechseleinheit (114), die dazu eingerichtet ist, die Haltepositionen mehrerer Werkzeuge zwischen Haltern der Werkzeughalterung (102, 164) zu wechseln; und
eine Werkzeugverwaltungseinheit (130), die dazu eingerichtet ist, ein nicht-verwendbares Werkzeug unter den durch die Werkzeughalterung (102, 164) gehaltenen Werkzeugen zu identifizieren, wobei das nicht-verwendbare Werkzeug ein Werkzeug ist, das nicht verwendet werden soll, wobei
in einem Fall, in dem mehrere Werkzeuge eines selben Typs sowohl durch die ersten als auch die zweiten Halter (168) gehalten werden, wenn eine Anzahl der ersten Halter (168A) unter Haltern als Halteziele größer ist als eine Anzahl der zweiten Halter (168B) unter den Haltern als die Halteziele, und eines der an den zweiten Haltern (168B) angebrachten Werkzeuge als das nicht-verwendbare Werkzeug identifiziert ist, die Werkzeugwechseleinheit (114) das nicht-verwendbare Werkzeug in dem zweiten Halter (168B) gegen das Werkzeug in dem ersten Halter (168A) austauscht.

4. Werkzeugmaschine (100), umfassend:
eine Werkzeughalterung (102, 164), die einen Drehhalter (168) aufweist, der dazu eingerichtet ist, ein Werkzeug zu fixieren, um es dem Werkzeug zu erlauben, ein Drehen durchzuführen, und einen Rotationshalter (168) aufweist, der dazu eingerichtet ist, ein Werkzeug zu fixieren, um es dem Werkzeug zu erlauben, eine Rotationsbearbeitung durchzuführen;
eine Bearbeitungssteuereinheit (116), die dazu eingerichtet ist, ein durch die Werkzeughalterung (102, 164) gehaltenes Werkzeug zu steuern, um ein Werkstück gemäß einem Bearbeitungsprogramm zu bearbeiten;
eine Werkzeugwechseleinheit (114), die dazu eingerichtet ist, die Haltepositionen mehrerer Werkzeuge zwischen Haltern der Werkzeughalterung (102, 164) zu wechseln; und
eine Werkzeugverwaltungseinheit (130), die dazu eingerichtet ist, ein nicht-verwendbares Werkzeug unter den durch die Werkzeughalterung (102, 164) gehaltenen Werkzeugen zu identifizieren, wobei das nicht-verwendbare Werkzeug ein Werkzeug ist, dessen Verwendung verboten ist, wobei
in einem Fall, in dem mehrere Werkzeuge eines selben Typs sowohl durch den Drehhalter als auch den Rotationshalter gehalten werden, wenn eine Anzahl eines der Drehhalter (168) und der Rotationshalter (168) als Halteziele größer ist als eine Anzahl des anderen, und eines der an den Haltern (168) auf einer Minderheitsseite angebrachten Werkzeuge als das nicht-verwendbare Werkzeug identifiziert ist, die Werkzeugwechseleinheit (114) das nicht-verwendbare Werkzeug in dem Halter (168) auf der Minderheitsseite gegen das Werkzeug in dem Halter (168) auf einer Mehrheitsseite austauscht.

5. Werkzeugmaschine (100) nach Anspruch 3, wobei
die erste Richtung eine von einer radialen Richtung und einer axialen Richtung der Werkzeughalterung ist, und
die zweite Richtung die andere der radialen Richtung und der axialen Richtung der Werkzeughalterung ist.

6. Werkzeugmaschine (100) nach einem der Ansprüche 1 bis 3, des Weiteren umfassend eine Werkzeugaufbewahrungseinheit (106), die in der Lage ist, in ihrem Inneren mehrere Werkzeuge aufzubewahren, wobei,
wenn ein Werkzeug eines selben Typs wie die Werkzeuge, die durch sowohl den ersten als auch den zweiten Halter (168) gehalten werden, als ein verwendbares Werkzeug in der Werkzeugaufbewahrungseinheit (106) aufbewahrt ist, die Werkzeugwechseleinheit (114) das durch den ersten oder zweiten Halter (168) gehaltene nicht-verwendbare Werkzeug gegen das verwendbare Werkzeug in der Werkzeugaufbewahrungseinheit (106) austauscht.

7. Werkzeugmaschine (100) nach Anspruch 6, wobei die Werkzeugwechseleinheit (114) einen Werkzeugwechsel zwischen dem Werkzeug in dem ersten Halter (168A) und dem Werkzeug in dem zweiten Halter (168B) unter einer Bedingung durchführt, dass das verwendbare Werkzeug nicht in der Werkzeugaufbewahrungseinheit (106) aufbewahrt ist.

8. Werkzeugmaschine (100) nach Anspruch 4, des Weiteren umfassend eine Werkzeugaufbewahrungseinheit (106), die in der Lage ist, in ihrem Inneren mehrere Werkzeuge aufzubewahren, wobei,
wenn ein Werkzeug eines selben Typs wie die Werkzeuge, die durch sowohl den Drehhalter als auch den Rotationshalter (168) gehalten werden, als ein verwendbares Werkzeug in der Werkzeugaufbewahrungseinheit (106) aufbewahrt ist, die Werkzeugwechseleinheit (114) das das durch den Drehhalter oder den Rotationshalter gehaltene nicht-verwendbare Werkzeug gegen das verwendbare Werkzeug in der Werkzeugaufbewahrungseinheit (106) austauscht.

9. Werkzeugmaschine (100) nach Anspruch 8, wobei die Werkzeugwechseleinheit (114) einen Werkzeugwechsel zwischen dem Werkzeug in dem Drehhalter und dem Werkzeug in dem Rotationshalter unter einer Bedingung durchführt, dass das verwendbare Werkzeug nicht in der Werkzeugaufbewahrungseinheit (106) aufbewahrt ist.

## Revendications

1. Machine-outil (100) comprenant :
un porte-outils (102, 164) comportant un premier support (168A) configuré pour maintenir un outil afin de couper une partie côté diamètre intérieur d'une pièce, et un second support (168B) configuré pour maintenir un outil afin de couper une partie côté diamètre extérieur d'une pièce ;
une unité de commande d'usinage (116) configurée pour commander un outil fixé au porte-outils (102, 164) afin d'usiner une pièce en fonction d'un programme d'usinage ;
une unité de changement d'outil (114) configurée pour changer des positions de maintien d'une pluralité d'outils entre des supports du porte-outils (102, 164) ; et
une unité de gestion d'outils (130) configurée pour identifier un outil inutilisable dans les outils maintenus par le porte-outils (102, 164), l'outil inutilisable étant un outil à ne pas utiliser, dans laquelle
dans un cas où une pluralité d'outils d'un même type sont maintenus à la fois par les premier et second supports (168), lorsqu'un nombre des premiers supports (168A) dans des supports servant de cibles de maintien est supérieur à un nombre des seconds supports (168B) dans les supports servant de cibles de maintien, et l'un des outils maintenus par les seconds supports (168B) est identifié comme l'outil inutilisable, l'unité de changement d'outil (114) remplace l'outil inutilisable dans le second support (168B) par l'outil dans le premier support (168A).

2. Machine-outil (100) comprenant :
un porte-outils (102, 164) comportant un premier support (168A) configuré pour maintenir un outil afin de couper une partie côté diamètre intérieur d'une pièce, et un second support (168B) configuré pour maintenir un outil afin de couper une partie côté diamètre extérieur d'une pièce ;
une unité de commande d'usinage (116) configurée pour commander un outil maintenu par le porte-outils (102, 164) afin d'usiner une pièce en fonction d'un programme d'usinage ;
une unité de changement d'outil (114) configurée pour changer des positions de maintien d'une pluralité d'outils entre des supports du porte-outils (102, 164) ; et
une unité de gestion d'outils (130) configurée pour identifier un outil inutilisable dans les outils maintenus par le porte-outils (102, 164), l'outil inutilisable étant un outil à ne pas utiliser, dans laquelle
dans un cas où une pluralité d'outils d'un même type sont maintenus à la fois par les premier et second supports (168), lorsqu'un nombre des seconds supports (168B) dans les supports servant de cibles de maintien est supérieur à un nombre des premiers supports (168A) dans des supports servant de cibles de maintien, et l'un des outils maintenus par les premiers supports (168A) est identifié comme étant l'outil inutilisable, l'unité de changement d'outil (114) remplace l'outil inutilisable dans le premier support (168A) par l'outil maintenu dans le second support (168B).

3. Machine-outil (100) comprenant :
un porte-outils (102, 164) comportant un premier support (168A) configuré pour permettre d'insérer une partie de queue d'un outil dans celui-ci dans une première direction afin de maintenir l'outil, et un second support (168B) configuré pour permettre d'insérer une partie de queue d'un outil dans celui-ci dans une seconde direction différente de la première direction afin de maintenir l'outil ;
une unité de commande d'usinage (116) configurée pour commander un outil maintenu par le porte-outils (102, 164) afin d'usiner une pièce en fonction d'un programme d'usinage ;
une unité de changement d'outil (114) configurée pour changer des positions de maintien d'une pluralité d'outils entre des supports du porte-outils (102, 164) ; et
une unité de gestion d'outils (130) configurée pour identifier un outil inutilisable dans les outils maintenus par le porte-outils (102, 164), l'outil inutilisable étant un outil à ne pas utiliser, dans laquelle
dans un cas où une pluralité d'outils d'un même type sont maintenus à la fois par les premier et second supports (168), lorsqu'un nombre des premiers supports (168A) dans des supports servant de cibles de maintien est supérieur à un nombre des seconds supports (168B) dans les supports servant de cibles de maintien, et l'un des outils fixés aux seconds supports (168B) est identifié comme étant l'outil inutilisable, l'unité de changement d'outil (114) remplace l'outil inutilisable dans le second support (168B) par l'outil dans le premier support (168A).

4. Machine-outil (100) comprenant :
un porte-outils (102, 164) comportant un support de tournage (168) configuré pour bloquer un outil afin de permettre à l'outil de réaliser un tournage, et un support rotatif (168) configuré pour bloquer un outil afin de permettre à l'outil de réaliser un usinage rotatif ;
une unité de commande d'usinage (116) configurée pour commander un outil maintenu par le porte-outils (102, 164) afin d'usiner une pièce en fonction d'un programme d'usinage ;
une unité de changement d'outil (114) configurée pour changer des positions de maintien d'une pluralité d'outils entre des supports du porte-outils (102, 164) ; et
une unité de gestion d'outils (130) configurée pour identifier un outil inutilisable dans les outils maintenus par le porte-outils (102, 164), l'outil inutilisable étant un outil d'utilisation interdite, dans laquelle
dans un cas où une pluralité d'outils d'un même type sont maintenus à la fois par le support de tournage et le support rotatif, lorsqu'un nombre d'un des supports de tournage (168) et des supports rotatifs (168) servant de cibles de maintien est supérieur à un nombre de l'autre, et l'un des outils fixés à des supports (168) sur un côté minoritaire est identifié comme étant l'outil inutilisable, l'unité de changement d'outil (114) remplace l'outil inutilisable dans le support (168) sur le côté minoritaire par l'outil dans le support (168) sur un côté majoritaire.

5. Machine-outil (100) selon la revendication 3, dans laquelle
la première direction est une parmi une direction radiale et une direction axiale du porte-outil, et
la seconde direction est l'autre parmi la direction radiale et la direction axiale du porte-outils.

6. Machine-outil (100) selon l'une quelconque des revendications 1 à 3, comprenant en outre une unité de stockage d'outils (106) capable de stocker une pluralité d'outils dans celle-ci, dans laquelle
lorsqu'un outil d'un même type que les outils maintenus par les premier et second supports (168) est stocké dans l'unité de stockage d'outils (106) comme un outil utilisable, l'unité de changement d'outil (114) remplace l'outil inutilisable maintenu par le premier ou second support (168) par l'outil utilisable dans l'unité de stockage d'outils (106).

7. Machine-outil (100) selon la revendication 6, dans laquelle l'unité de changement d'outil (114) réalise un changement d'outil entre l'outil dans le premier support (168A) et l'outil dans le second support (168B) à condition que l'outil utilisable ne soit pas stocké dans l'unité de stockage d'outils (106).

8. Machine-outil (100) selon la revendication 4, comprenant en outre une unité de stockage d'outils (106) capable de stocker une pluralité d'outils dans celle-ci, dans laquelle
lorsqu'un outil d'un même type que les outils maintenus à la fois par le support de tournage et le support rotatif (168) est stocké dans l'unité de stockage d'outils (106) comme un outil utilisable, l'unité de changement d'outil (114) remplace l'outil inutilisable maintenu par le support de tournage ou le support rotatif par l'outil utilisable dans l'unité de stockage d'outils (106).

9. Machine-outil (100) selon la revendication 8, dans laquelle l'unité de changement d'outil (114) réalise un changement d'outil entre l'outil dans le support de tournage et l'outil dans le support rotatif à condition que l'outil utilisable ne soit pas stocké dans l'unité de stockage d'outils (106).
